# FASCICULE DE BREVET EUROPEEN

(11) **EP 1 035 977 B1**
(45) Date de publication et mention de la délivrance du brevet: **13.03.2002**
(21) Numéro de dépôt: 98904045.6
(22) Date de dépôt: 08.01.1998
(51) Int. Cl.: B60C 5/14, B60C 1/00

(54) **PNEUMATIQUE COMPORTANT UNE COUCHE IMPERMEABLE A L'AIR AVEC UNE COUCHE METALLIQUE DUCTILE**
REIFEN MIT EINER AUS DUKTILEM METALL ENTHALTENDEN LUFTDICHTEN LAGE
TYRE COMPRISING AN AIRTIGHT LAYER WITH A DUCTILE METAL LAYER

(30) Priorité: 30.01.1997 FR 9701257
(43) Date de publication de la demande: 20.09.2000
(73) Titulaire: Compagnie Générale des Etablissements MICHELIN-MICHELIN & CIE, 63040 Clermont-Ferrand Cedex 09 (FR)
(72) Inventeur: PEYRON, Georges, F-63200 Riom (FR)
(74) Mandataire: Dequire, Philippe Jean-Marie Denis
(86) Numéro de dépôt international: EP9800078
(87) Numéro de publication internationale: WO9833668

(56) Documents cités:
- EP-A- 0 557 091
- EP-A- 0 760 297
- DE-B- 1 011 300
- US-A- 3 106 210
- US-A- 3 586 005
- PATENT ABSTRACTS OF JAPAN vol. 006, no. 020 (M-110), 5 février 1982 & JP 56 138005 A (BRIDGESTONE CORP), 28 octobre 1981,

## Description

La présente invention est relative à un revêtement imperméable à l'air destiné à être utilisé dans des pneumatiques.

Les pneumatiques sans chambre à air présentent une surface intérieure de faible perméabilité à l'air afin d'éviter un dégonflage du pneumatique et de protéger les zones internes sensibles de ce dernier contre les arrivées d'oxygène et d'eau, telles que les nappes contenant des câbles métalliques sensibles à l'oxydation. Aujourd'hui une telle protection de la surface intérieure des pneumatiques est réalisée par des revêtements constitués par des gommes en butyle.

Mais depuis que les économies de carburant et la nécessité de protéger l'environnement sont devenues une priorité, il est souhaitable de produire des revêtements imperméables à l'air et présentant un poids et une hystérèse aussi faibles que possible. Or les performances en terme d'imperméabilité à l'air des gommes butyles sont liées à une épaisseur minimum non négligeable de gomme (de l'ordre du millimètre) et donc à un certain poids, qui ne permet pas de répondre efficacement à ces nouvelles exigences.

Pour atteindre un tel objectif de réduction de poids des revêtements tout en maintenant de bonnes propriétés d'imperméabilité à l'air, de nombreuses solutions ont été proposées.
La très grande majorité de ces solutions se sont essentiellement concentrées sur l'utilisation de matériaux de très faible perméabilité à l'air autres que le butyle. En particulier, on a proposé l'utilisation de structures composites lamellaires constituées d'une ou plusieurs couches de matériau barrière, à laquelle ou auxquelles est ou non adjointe une couche adhésive qui assure le maintien sur le mélange à revêtir.

A titre d'exemples illustratifs de cet art antérieur, nous pouvons citer les brevets US-4 874 670 et US-5 036 113 qui décrivent la mise au point d'une gomme intérieure élastomérique constituée par un film de polymère photoréticulé dont le maintien au mélange interne de l'enveloppe est assuré par un adhésif (résine formophénolique ou acrylate d'alcool à longue chaîne polymérisée). Malgré une épaisseur et une perméabilité à l'air réduites par rapport à la gomme intérieure à base de butyle, ce film présente une médiocre tenue en température de l'adhérence ainsi que des valeurs trop élevées de température de transition vitreuse (Tg) pour une utilisation en tant que gomme intérieure d'enveloppe de pneumatique.
De plus, la perméabilité à l'oxygène des polyuréthannes augmente en présence d'eau ce qui est défavorable pour le rôle de protection par la gomme intérieure des nappes internes contre la corrosion des câbles, ainsi que pour le maintien de la pression de gonflage. Le même problème apparaît dans le brevet US-5 264 524 où le revêtement barrière est constitué par un copolymère acrylonitrile/butadiène/polyurée.

D'autres solutions ont également été proposées telles que présentées dans le brevet US-5 236 030 qui décrit un revêtement intérieur d'enveloppe de pneumatique constituée d'un film mince de polyéthylène ultra-haute masse moléculaire (UHMWPE) dont l'imperméabilité à l'air et la légèreté sont accrues par rapport à une gomme intérieure en butyle, sans nécessiter l'emploi de couche adhésive bien qu'aucune démonstration de la suffisance de collant de la couche UHMWPE ne soit présentée. La pose de cette couche est réalisée directement à l'intérieur de l'enveloppe de pneumatique ce qui entraîne probablement, lors de la conformation dans l'enveloppe de pneumatique et lors de la vulcanisation, une altération de la cristallinité du film qui est un paramètre essentiel pour la faible perméabilité à l'air.
Dans les variantes d'application présentées dans les publications JP 4062009 et JP 4212602, le film de UHMWPE sous forme de poudre émulsionnée est pulvérisé ou brossé sur le mélange interne du pneu cru conformé puis séché et vulcanisé. Une telle méthode nécessite une parfaite maîtrise de la phase de séchage et suppose une durée d'opération peu compatible avec une application industrielle.

Une autre solution telle que la publication WO 92/20538 décrivant l'utilisation d'un réticulat élastomère de polyéthylène chloré (CPE) dont la perméabilité à l'oxygène, la masse et le coût sont réduits par rapport à une gomme intérieure en butyle, ne semble pas non plus satisfaisante, la fonction d'imperméabilité à l'air n'étant pas réalisée assez efficacement.

Il est, par ailleurs, à craindre que le caractère thermoplastique de la plupart des matériaux employés soit peu compatible avec les sollicitations d'ordre mécanique auxquelles sont soumises les surfaces intérieures lors des différentes phases d'assemblage et de vulcanisation, et lors du roulage de ces pneumatiques.

L'invention vise à réaliser un nouveau revêtement destiné aux pneumatiques imperméable à l'air et palliant ces difficultés.

La demanderesse a découvert de façon surprenante que les films plastiques métallisés dont les propriétés barrières sont connues pour la fabrication d'emballage notamment pour conserver des aliments et les protéger d'une oxydation, pouvaient être transposés aux pneumatiques avec certaines adaptations. Cette application paraît d'autant plus étonnante que l'homme de l'art connaît les incompatibilités de tels films avec des élastomères à la fois du point de vue de la réalisation d'une bonne liaison entre ces matériaux, indispensable pour une application aux pneumatiques, et l'insuffisance d'élasticité de tels films pour accompagner les déformations subies par leur support dans les applications aux pneumatiques.

Ainsi, l'invention concerne un pneumatique de forme toroïdale comportant une couche imperméable à l'air caractérisé en ce que la couche imperméable comporte au moins une couche métallique ductile.

En effet, la présence d'une couche métallique permet d'assurer une imperméabilité à l'air tout à fait satisfaisante et compatible avec les exigences liées aux pneumatiques. Par ailleurs, la ductilité de la couche métallique permet à la couche imperméable d'accompagner les déformations subies par la carcasse de pneumatique au cours de l'assemblage, de la cuisson et du roulage.

La couche imperméable peut être disposée d'un côté ou de l'autre de la nappe carcasse du pneumatique mais aussi classiquement être un revêtement imperméable placé sur la surface intérieure du pneumatique.

Selon une autre caractéristique, l'épaisseur de la couche métallique est inférieure ou égale à 5 µm (micromètres), et préférentiellement comprise entre 30 et 200 nm (nanomètres). Cette finesse permet ainsi d'une part, grâce à la ductilité du métal, d'accompagner de fortes déformations du pneumatique et, d'autre part, de fortement diminuer le poids de la couche imperméable en conservant la même performance d'imperméabilité, voire en l'améliorant.

Préférentiellement, la couche métallique est constituée par de l'aluminium. En effet, l'aluminium peut être facilement utilisé pour réaliser des films métallisés par dépôt sous vide.

Selon une variante de réalisation de l'invention, la couche imperméable comprend au moins une couche de protection recouvrant la couche métallique et qui permet de faciliter la manipulation de la couche métallique pour la mise en oeuvre du revêtement dans la fabrication du pneumatique.

Cette couche de protection peut être retirée une fois le pneumatique terminé ou conservée auquel cas elle est avantageusement constituée par un polymère étirable afin de suivre les déformations subies par le pneumatique et de faciliter leur suivi par la couche métallique.

D'autres caractéristiques et avantages de l'invention apparaîtront à la lecture de la description d'un exemple de réalisation d'un pneumatique conforme à l'invention, en référence aux dessins dans lesquels :
- la figure 1 est une coupe schématique partielle du pneumatique,
- la figure 2 est un grossissement du détail D de la figure 1 selon une première variante de réalisation de l'invention,
- la figure 3 est un grossissement du détail D de la figure 1 selon une deuxième variante de réalisation de l'invention,
- la figure 4 est un grossissement du détail D de la figure 1 selon une troisième variante de réalisation de l'invention,
- la figure 5 est une représentation schématique partielle du revêtement selon un premier mode de réalisation,
- la figure 6 est une représentation schématique partielle du revêtement selon un deuxième mode de réalisation,
- la figure 7 est une représentation schématique partielle du revêtement selon un troisième mode de réalisation.

On nommera, dans ce qui suit, avec les mêmes références, les éléments communs aux variantes de l'invention représentées dans les différentes figures.

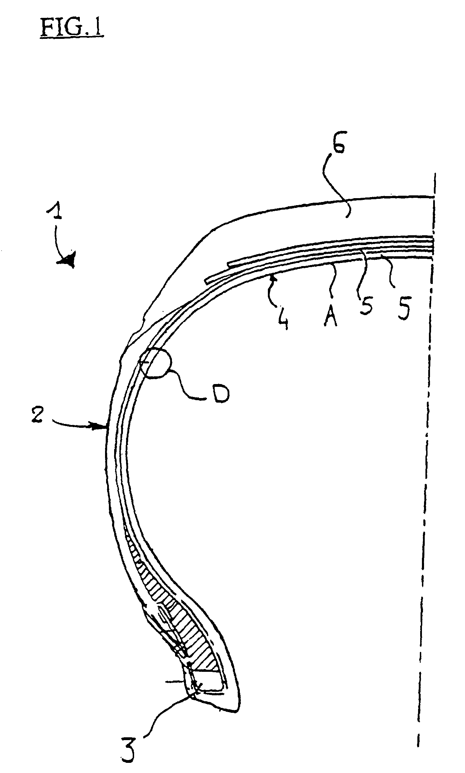

Selon la figure 1, le pneumatique 1 conforme à l'invention, comporte notamment une carcasse 2 de forme toroïdale, des tringles 3 et une bande de roulement 6 située au sommet de la carcasse 2.

La carcasse 2 comprend de manière connue en soi un revêtement 4 qui constitue la surface intérieure du pneumatique 1 ainsi que une ou plusieurs nappes dites "nappes carcasse" 5, ancrées autour des tringles 3.
Ce revêtement 4 est constitué par une couche métallique ductile A au contact du pneumatique.

Mais l'utilisation d'une couche métallique pose des problèmes importants. En effet, suite à des déformations, il n'y a pas de retour élastique pour la couche métallique, on a donc rupture ou apparition de micro-ondulations qui strient la surface, en changent l'aspect et sont source de contraintes locales résiduelles défavorables à une bonne tenue aux sollicitations dynamiques. C'est notamment la raison pour laquelle l'utilisation d'une telle couche métallique est a priori exclue pour l'homme du métier. Cependant, la demanderesse a découvert de façon surprenante que le choix d'un métal ductile permettait de faire néanmoins subir à ce métal un allongement par fluage sans fissuration appréciable et qu'il était donc possible d'utiliser une telle couche métallique dans le pneumatique.

De plus, dans ce même but on choisit une épaisseur de couche métallique la plus faible possible, ainsi on choisit une épaisseur ne dépassant pas 5 µm. Ceci permet, effectivement, de suivre les déformations du caoutchouc sans entraîner de déchirement de la couche métallique, et de procurer un avantage en poids. De préférence, on choisit une épaisseur voisine de 30 nm qui correspond à un minimum de perméabilité d'une couche métallique dans ce domaine d'épaisseur.

Différents métaux ductiles peuvent être choisis parmi les métaux usuels à structure cristalline cubique centré ou cubique face centrée, le zinc et le cadmium. L'aluminium sous forme pure paraît particulièrement intéressant du fait en particulier de sa facilité de mise en oeuvre pour réaliser des films métallisés.

Cependant, il est clair que la manipulation d'une très fine couche métallique A est quasiment impossible. C'est pourquoi, on doit prévoir que le revêtement 4 comprend une couche de protection B recouvrant la couche métallique A, comme le montre la figure 5.

Cette couche de protection B peut être uniquement utilisée à titre de support afin d'augmenter la cohésion du revêtement 4, et être retirée du pneumatique :
- soit avant la pose du revêtement 4, si elle était apposée sur la surface de la couche métallique A destinée à être assemblée à ce dernier, l'autre face de la couche métallique étant supportée,
- soit après la pose du revêtement 4, si la couche de protection B était liée à l'autre face de la couche métallique A.

Un tel revêtement 4 peut être fait par différentes méthodes, à titre d'exemple on peut citer la réalisation d'une couche métallisée peu adhérente sur un support non poreux (polyéthylène, polypropylène etc.) par dépôt sous vide du métal sur le support, que l'on transfère sur un des constituants du pneumatique tel qu'une des nappes carcasse 5, le support étant ensuite enlevé.

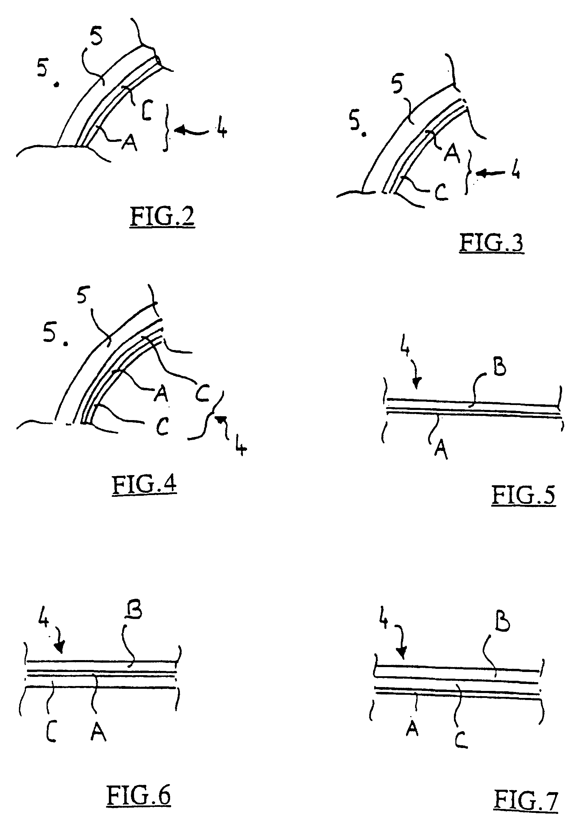

Les variantes de réalisation de l'invention représentées sur les figures 2 et 3, consistent en ce que le revêtement 4 comprend une couche de protection C comme précédemment, mais que cette couche reste dans le pneumatique. Cette couche de protection C est constituée par un polymère étirable afin de pouvoir subir les déformations du pneumatique.

La présence de cette couche de protection C est intéressante même si le gain en poids est un peu plus faible qu'avec la couche métallique A seule. En effet, elle permet, en plus de faciliter la manipulation du revêtement 4, de faire suivre à la couche métallique A les déformations avec plus de facilité, voire même d'améliorer l'imperméabilité. On peut donc jouer sur les épaisseurs relatives de ces deux couches afin de mieux réaliser les caractéristiques désirées.

Cette couche de protection C peut être située vers l'extérieur du pneumatique, c'est-à-dire que la couche métallique A est au contact de l'intérieur du pneumatique et la couche de protection C au contact de l'air comme le montre la figure 3, ou vers l'intérieur du pneumatique, c'est-à-dire entre ce dernier et la couche métallique A comme le montre la figure 2.

Le polymère étirable entrant dans la constitution de cette couche polymérique étirable C consiste en un caoutchouc naturel, un caoutchouc synthétique réticulable ou thermoplastique, ou un plastique déformable de faible raideur. On entend par un plastique déformable de faible raideur un plastique pouvant subir une déformation comparable à celle d'une gomme butyle classiquement utilisée. Il faut donc que les produits respectifs du module par l'épaisseur du plastique et de la gomme butyle soient comparables. Un plastique déformable sera considéré comme étant de faible raideur si le produit de son module par son épaisseur est inférieur ou égal à 3000 N/m et de préférence inférieur ou égal à 1000 N/m.

A titre d'exemples de caoutchouc synthétique réticulable, on peut citer : un polybutadiène, un copolymère styrène-butadiène, un EPDM, le butyle, des polymères acryliques ou méthacryliques, et, à titre d'exemples de caoutchouc synthétique thermoplastique : un copolymère éthylène-propylène, un polyuréthanne, et à titre de plastique déformable de faible raideur : un polypropylène ou un polyéthylène.

Le revêtement 4 comprenant les couches A et C, peut être réalisé notamment:
- par pulvérisation ou collage du polymère étirable sur la couche métallique déposée sur une couche de protection B ou sur le pneumatique,
- ou par transfert d'une couche métallisée peu adhérente sur un support non poreux (polyéthylène, polypropylène, polyester, polyamide etc.) sur une couche de polymère étirable,
- ou par l'enduction d'un support pelable (papier, plastique...) ou soluble dans l'eau (alcool polyvinylique, polyvinylpirrolidone) avec un polymère étirable, puis la métallisation de la couche de polymère. Lorsque l'on enlève le support, il reste un film de polymère métallisé.

Une troisième variante de réalisation de l'invention représentée à la figure 7, le revêtement 4 comporte deux couches de protection B et C, la couche de protection C étant disposée entre la couche métallique A et la couche de protection B.

Selon une autre variante de réalisation de l'invention, le revêtement 4 comporte deux couches de protection, la couche métallique étant disposée entre ces deux couches de protection. Ces deux couches de protection peuvent être également constituées par deux couches C comme représenté sur la figure 4, ou une couche B et une couche C comme représenté sur la figure 6.

Ces différentes combinaisons ainsi que les autres combinaisons possibles (notamment celles qui comportent davantage de couches) permettent d'optimiser les caractéristiques du revêtement, plus généralement du pneumatique, désirées et/ou de faciliter la fabrication du pneumatique.

On peut ainsi envisager d'utiliser ce nouveau revêtement en intégrant son étape d'assemblage dans le procédé d'assemblage classique du pneumatique à la place de l'assemblage de la gomme butyle, avant ou après la conformation, le revêtement 4 pouvant subir les différentes déformations dues à l'assemblage et à la cuisson. On peut également, bien que cette solution soit moins intéressante industriellement, assembler ce revêtement 4 au pneumatique seulement après la cuisson afin de limiter les déformations à subir par celui-ci.

Pour réaliser l'assemblage du revêtement 4, on peut utiliser les colles du commerce permettant de réaliser des liaisons métal-caoutchouc en choisissant celles qui résistent également à certaines contraintes et/ou montée en température, par exemple dans le cas d'une couche métallique A en aluminium on pourra utiliser comme adhésif le CHEMOSIL.220 commercialisé par la société HENKEL.

D'autres procédés peuvent, bien entendu, être envisagés qui ne nécessitent pas la présence d'une colle de liaison.

Les exemples suivants permettent d'illustrer l'invention sans toutefois la limiter.

### Exemple 1

Cet exemple vise à mettre en évidence le gain en imperméabilité à l'air réalisé par un film métallisé par rapport à la gomme butyle utilisée classiquement en tant que surface intérieure de pneumatique, et à montrer que cette imperméabilité est liée à la présence du métal.

Pour cela, on a comparé les perméabilités à l'air à 80°C des quatre échantillons suivants :
- L'échantillon "BUTYLE" comprend une couche de gomme butyle d'épaisseur 0,6 mm (millimètres) réalisée en une seule étape, de formulation (les parties étant exprimées en poids) :

| | | | |
|---|---|---|---|
| Elastomère butyle | 100 | Acide stéarique | 2 |
| Noir N772 | 62 | Soufre | 1 |
| Huile aromatique | 10 | MBTS* | 1 |
| Oxyde de zinc | 3 | | |

| | | | |
|---|---|---|---|
| *MBTS = disulfure de benzothiazyle. | | | |

- L'échantillon "CLARYL" qui comprend un support perméable à base de caoutchouc naturel de 0,6 mm d'épaisseur sur lequel on a collé un film CLARYL 34.10 commercialisé par la société RHONE-POULENC composé d'une couche de polyester PET (polyéthylène téréphtalate) d'épaisseur 12 µm recouverte sur une face par environ 30 nm d'aluminium.
Le collage est réalisé grâce au CHEMOSIL.220 commercialisé par la société HENKEL, qui se présente sous la forme d'une dissolution et est connu dans la littérature pour le collage des métaux usuels (acier, aluminium ...) sur des mélanges caoutchouteux. Le mode opératoire suivi consiste à déposer sur la face aluminium du film CLARYL une couche de CHEMOSIL.220 au pistolet, de sécher pendant 45 mn (minutes) à température ambiante (ou 10 mn à 80°C), puis de déposer une couche de dissolution à 10 % du mélange de caoutchouc naturel utilisé pour le support et de coller ainsi le film CLARYL sur ledit support.
- L'échantillon "PET" comprend une couche de PET identique à celui utilisé dans le film CLARYL d'épaisseur 12 µm déposé sur un support identique à celui de l'échantillon CLARYL de 0,6 mm d'épaisseur.

La vulcanisation est effectuée pour tous les échantillons à 150°C pendant 40 mn.

La mesure de perméabilité a été effectuée selon la norme NFT46037.

Les résultats obtenus sont consignés dans le tableau I suivant.

**TABLEAU I**

| Echantillons | BUTYLE | CLARYL | PET |
|---|---|---|---|
| Perméabilité à 80°C (10⁻¹⁸ m⁴/N.s) | 5,40.10⁻¹⁷ | non mesurable | 3,75.10⁻¹⁸ |

On constate que la perméabilité de l'échantillon CLARYL est trop faible pour être mesurée, et donc bien plus faible que celle de l'échantillon BUTYLE.

Par ailleurs, la comparaison de la perméabilité des échantillons PET et CLARYL permet de confirmer que la très faible perméabilité à l'air du film CLARYL est due essentiellement à l'aluminium. Ceci permet de montrer l'intérêt de l'utilisation d'un film métallique tel que l'aluminium pour obtenir une très faible perméabilité à l'air.

Les échantillons BUTYLE et CLARYL ont, de plus, été soumis à 200 cycles de tractions à 10 % d'allongement suivies de flexions. A l'issue de ces essais de fatigue, aucun des échantillons ne présente de détérioration, les résultats de mesure de perméabilité sont identiques aux résultats obtenus précédemment. Ceci montre la tenue à la fatigue de l'étanchéité du revêtement contenant une couche métallique.

### Exemple 2

Cet exemple a pour objet de mettre en évidence les gains en poids et en perméabilité réalisés par l'utilisation d'un film métallisé. Dans cet exemple, on a réalisé trois pneumatiques ayant les mêmes constituants à part le revêtement de leur surface intérieure :
- le pneumatique 1 est un pneumatique tourisme de dimensions 175/70 R14 de la gamme MXT commercialisé par la société MICHELIN, dont le revêtement intérieur est constitué par une gomme butyle,
- le pneumatique 2 est identique au pneumatique 1 à l'exception du revêtement de gomme butyle qui a été enlevé,
- le pneumatique 3 est identique au pneumatique 1 à l'exception du revêtement de gomme butyle qui a été remplacé par un film CLARYL 34.10. Le collage du film CLARYL a été réalisé de la même façon que dans l'exemple 1 après la conformation du pneumatique mais avant sa cuisson. En effet, le PET du film CLARYL ne répond pas au critère de plastique déformable de faible raideur, il ne pourrait donc pas supporter les déformations du pneumatique dues à la conformation, le collage du film CLARYL doit donc être réalisé après celle-ci.

Ces trois pneumatiques ont été pesés avant leur montage sur jante. Puis une fois montés, ces pneumatique ont été gonflés à une même pression de 2,3 bars. On a mesuré de nouveau la pression de ces trois pneumatiques après les avoir laissés pendant 28 jours à une température de 55°C.

Les résultats de masse et de perte de pression obtenus sont consignés dans le tableau II suivant.

**TABLEAU II**

| Pneumatiques | 1 | 2 | 3 |
|---|---|---|---|
| Masse (g) | 7740 | 7180 | 7235 |
| Perte de pression à 28 jours (bars) | 0,3 | 0,55 | 0,15 |
| % de perte de pression | 13,04 | 23,91 | 6,52 |

On constate que les pneumatiques 2 (sans revêtement) et 3 (CLARYL) présentent un gain de poids non négligeable par rapport au pneumatique 1 (butyle). En revanche, on constate que les pertes de pression avec le pneumatique 2 (sans revêtement) sont très importantes et que seul le pneumatique 3 (CLARYL) permet de réaliser une nette réduction des pertes de pression par rapport au pneumatique 1 (butyle).

Cet exemple confirme le double intérêt de l'utilisation d'un film métallique dans une surface intérieure de pneumatique afin de réaliser un gain de poids et une amélioration de l'imperméabilité par rapport à la gomme butyle.

## Revendications

1. Pneumatique de forme toroïdale comportant une couche imperméable à l'air (4) **caractérisé en ce que** ladite couche imperméable comporte au moins une couche métallique ductile (A).

2. Pneumatique selon la revendication 1, dans lequel ladite couche imperméable est un revêtement imperméable disposé sur la surface intérieure dudit pneumatique.

3. Pneumatique selon l'une des revendications 1 et 2, dans lequel l'épaisseur de la couche métallique (A) est inférieure ou égale à 5 µm.

4. Pneumatique selon la revendication 3, dans lequel l'épaisseur de la couche métallique (A) est comprise entre 30 et 200 nm.

5. Pneumatique selon l'une quelconque des revendications 1 à 4, dans lequel la couche imperméable comprend au moins une couche de protection (B, C) recouvrant la couche métallique (A).

6. Pneumatique selon l'une quelconque des revendications 1 à 5, dans lequel la couche imperméable comprend deux couches de protection (B, C), différentes ou identiques, entre lesquelles est disposée la couche métallique (A).

7. Pneumatique selon l'une quelconque des revendications 5 ou 6, dans lequel la ou l'une au moins des couches de protection (C) est constituée par un polymère étirable.

8. Pneumatique selon l'une quelconque des revendications 1 à 5, dans lequel la couche imperméable comprend deux couches de protection (B, C), différentes ou identiques, l'une des couches de protection (C) étant constituée par un polymère étirable et disposée entre la couche métallique (A) et l'autre couche de protection (B).

9. Pneumatique selon l'une quelconque des revendications 7 ou 8, dans lequel le polymère étirable est choisi parmi le caoutchouc naturel, un caoutchouc synthétique ou un plastique déformable de faible raideur.

10. Pneumatique selon l'une quelconque des revendications 1 à 9, dans lequel la couche métallique ductile (A) est constituée par de l'aluminium.

## Patentansprüche

1. Reifen mit kreisringartiger Form, der eine luftundurchlässige Schicht (4) aufweist, **dadurch gekennzeichnet ist, daß** die undurchlässige Schicht mindestens eine duktile, metallische Schicht (A) aufweist.

2. Reifen nach Anspruch 1, worin die genannte, undurchlässige Schicht eine undurchlässige Auskleidung ist, die auf der Innenoberfläche des genannten Reifens angeordnet ist.

3. Reifen nach einem der Ansprüche 1 und 2, worin die Dicke der metallischen Schicht (A) kleiner oder gleich 5 µm ist.

4. Reifen nach Anspruch 3, worin die Dicke der metallischen Schicht (A) zwischen 30 und 200 nm liegt.

5. Reifen nach irgendeinem der Ansprüche 1 bis 4, worin die undurchlässige Schicht mindestens eine Schutzschicht (B,C) aufweist, die die metallische Schicht (A) abdeckt.

6. Reifen nach irgendeinem der Ansprüche 1 bis 5, worin die undurchlässige Schicht zwei Schutzschichten (B,C) aufweist, die unterschiedlich oder identisch sind und zwischen denen die metallische Schicht (A) angeordnet ist.

7. Reifen nach irgendeinem der Ansprüche 5 oder 6, worin die Schutzschicht oder mindestens eine der Schutzschichten (C) aus einem dehnbaren Polymer gebildet ist.

8. Reifen nach irgendeinem der Ansprüche 1 bis 5, worin die undurchlässige Schicht zwei Schutzschichten (B,C) aufweist, die unterschiedlich oder identisch sind, wobei die eine der Schutzschichten (C) von einem dehnbaren Polymer gebildet und zwischen der metallischen Schicht (A) und der anderen Schutzschicht (B) angeordnet ist.

9. Reifen nach irgendeinem der Ansprüche 7 oder 8, worin das dehnbare Polymer unter dem Naturgummi, einem synthetischen Gummi und einem verformbaren Kunststoff geringer Steifigkeit gewählt ist.

10. Reifen nach irgendeinem der Ansprüche 1 bis 9, worin die duktile, metallische Schicht (A) von Aluminium gebildet ist.

## Claims

1. A toroidal tyre comprising an airtight layer (4), **characterised in that** said airtight layer comprises at least one ductile metal layer (A).

2. A tyre according to Claim 1, in which said airtight layer is an airtight coating placed on the interior surface of said tyre.

3. A tyre according to one of Claims 1 and 2, in which the thickness of the metal layer (A) is less than or equal to 5 µm.

4. A tyre according to Claim 3, in which the thickness of the metal layer (A) ranges between 30 and 200 nm.

5. A tyre according to any one of Claims 1 to 4, in which the airtight layer includes at least one protective layer (B, C) covering the metal layer (A).

6. A tyre according to any one of Claims 1 to 5, in which the airtight layer comprises two protective layers (B, C), different or identical, between which the metal layer (A) is placed.

7. A tyre according to any one of Claims 5 or 6, in which the or at least one of said protective layers (C) consists of an extendible polymer.

8. A tyre according to any one of Claims 1 to 5, in which the airtight layer comprises two protective layers (B, C), different or identical, one of the protective layers (C) consisting of an extendible polymer placed between the metal layer (A) and the other protective layer (B).

9. A tyre according to any one of Claims 7 or 8, in which the extendible polymer is chosen from among natural rubber, a synthetic rubber or a deformable plastic of low rigidity.

10. A tyre according to any one of Claims 1 to 9, in which the ductile metal layer (A) is made of aluminium.
